# EUROPÄISCHE PATENTSCHRIFT

(11) **EP 1 409 892 B1**
(45) Veröffentlichungstag und Bekanntmachung des Hinweises auf die Patenterteilung: **11.05.2005**
(21) Anmeldenummer: 02751099.9
(22) Anmeldetag: 03.07.2002
(51) Int. Cl.: F16H 57/02, F16C 33/46, F16C 33/48

(54) **LOSRADLAGER**
IDLER BEARING
SUPPORT DE PIGNON FOU

(30) Priorität: 26.07.2001 DE 10136372
(43) Veröffentlichungstag der Anmeldung: 21.04.2004
(73) Patentinhaber: INA-Schaeffler KG, 91074 Herzogenaurach (DE)
(72) Erfinder: WINKLER, Manfred, 91086 Aurachtal (DE)
(86) Internationale Anmeldenummer: PCT/EP2002/007329
(87) Internationale Veröffentlichungsnummer: WO 2003/010445

(56) Entgegenhaltungen:
- DE-A- 2 522 643
- DE-A- 4 219 143
- DE-A- 10 002 026
- FR-A- 2 747 443
- US-A- 5 332 318
- US-A- 5 343 991

## Beschreibung

### Anwendungsgebiet der Erfindung

Die Erfindung betrifft ein lose auf einer Welle umlaufendes Zahnrad für ein Zahnräderwechselgetriebe eines Kraftfahrzeuges, das über ein Kuppelelement mit der Welle kuppelbar ist, wobei radial zwischen einer der Welle zugeordneten inneren Laufbahn und einer einer Nabe des Zahnrades zugeordneten äußeren Laufbahn zylindrische Wälzkörper angeordnet sind.

### Hintergrund der Erfindung

Ein derartiges Zahnräderwechselgetriebe für ein Kraftfahrzeug ist beispielhaft in der DE 197 13 304 A1 vorbeschrieben. Das in Figur 1 dieser Vorveröffentlichung gezeigte Zahnrad ist auf einer Getriebewelle über zwei voneinander beabstandete zylindrische Wälzkörperreihen gelagert, die in einem Käfig untergebracht sind. Nachteilig dabei ist, dass die Montage der aus Zahnrad und Rollenkranz bestehenden Baueinheit erschwert ist, da beide Teile nicht aneinander gehalten sind.

### Zusammenfassung der Erfindung

Der Erfindung liegt daher die Aufgabe zu Grunde, eine Vormontage der Rollenkränze im Zahnrad zu ermöglichen, um so den Gesamtmontageaufwand beim Herstellen des Zahnräderwechselgetriebes zu verringern.

Erfindungsgemäß wird diese Aufgabe nach dem kennzeichnenden Teil von Anspruch 1 dadurch gelöst, dass das Zahnrad über zwei voneinander beabstandete aus zylindrischen Wälzkörpern und Käfigen bestehenden Rollenkränzen gelagert ist, wobei die Käfige mit radial nach außen gerichteten Vorsprüngen in eine Nut eingreifen, die in einem radial nach innen weisenden Mittelbord des Zahnrades zwischen den äußeren Laufbahnen der Rollenkränze angeordnet ist.

Auf diese Weise ist eine aus Zahnrad und Rollenkränzen bestehende Baueinheit gebildet, deren Teile unverlierbar aneinander gehalten sind. Dies hat den Vorteil, das Zahnrad und Rollenkränze während des Transportes nicht mehr auseinander fallen können und beim Montieren als ein Bauteil gehandhabt werden können. Die Vorsprünge können dabei in der unterschiedlichsten Art und Weise ausgebildet sein. Entweder als gleichmäßig in Umfangsrichtung voneinander beabstandete Haltenasen oder als ein umlaufender Haltering.

Vorteilhafte Weiterbildungen der Erfindung sind in den Unteransprüchen beschrieben.

Eine besonders vorteilhafte Verbindung zwischen Zahnrad und Rollenkränzen lässt sich gemäß Anspruch 2 dann realisieren, wenn die Vorsprünge der Käfige elastisch ausgebildet sind. In diesem Fall hat es sich nach Anspruch 3 als günstig erwiesen, wenn zur Herstellung der Elastizität der Vorsprung mit einem in radialer Richtung innen liegenden Freiraum verbunden ist, in den der Vorsprung beim Einschnappen ausweichen kann.

Schließlich ist nach einem weiteren Merkmal der Erfindung gemäß Anspruch 4 vorgesehen, dass der Käfig an einer Umfangsstelle einen durchgehenden Längsschlitz aufweisen soll. Dadurch wird erreicht, dass sich der Wälzlagerkäfig bei Rotation des Lagers unter der auf ihn einwirkenden Fliehkraft aufweitet und sich dabei entweder auf den Wälzkörpern oder unmittelbar an der Wälzkörperlaufbahnen abstützt und damit eine Erhöhung der Reibungsleistung des Lagers bewirkt. Auf diese Weise ist das dem Fachmann bekannte Phänomen des Losradkreischens wirkungsvoll beseitigt.

Die Aufgabe der Erfindung wird nach dem zweiten unabhängigen Anspruch 5 auch dadurch gelöst, dass das Zahnrad über einen doppelreihigen aus zwei voneinander beabstandeten zylindrischen Wälzkörperreihen und einem gemeinsamen Käfig bestehenden Rollenkranz gelagert ist, wobei der Käfig mit wenigstens einem radial nach außen gerichteten Vorsprung versehen ist, der in eine in der Nabe des Zahnrades angeordnete Nut eingreift.

Die Erfindung wird an nachstehenden Ausführungsbeispielen näher erläutert.

### Kurze Beschreibung der Zeichnungen

Es zeigen:
- Figur 1: einen Längsschnitt durch ein Zahnräderwechselgetriebe nach dem bisherigen Stand der Technik und
- Figuren 2 und 3: eine erfindungsgemäße Anordnung von Rollenkränzen in einem Zahnrad.

### Ausführliche Beschreibung der Zeichnungen

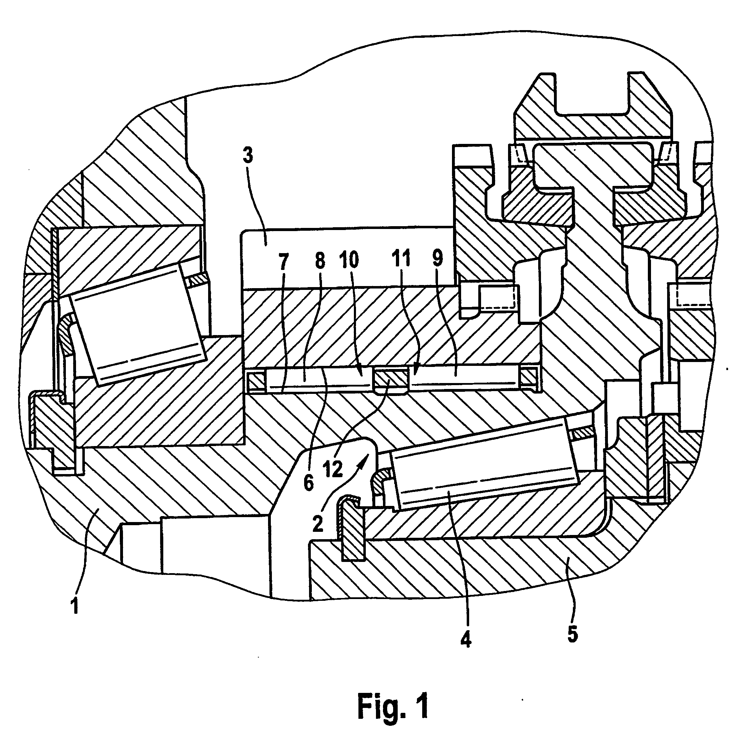

Gemäß dem in Figur 1 gezeigten Stand der Technik ist auf der Antriebswelle 1 über das Wälzlager 2 das mit einer Verzahnung versehene Losrad 3 gelagert. In der teilweise hohlen Antriebswelle 1 ist mit dem Kegelrollenlager 4 die Hauptwelle 5 gelagert. Losrad 3 und Antriebswelle 1 bilden die Laufbahnen 6, 7 für die Wälzkörper 8, 9, die als Lagemadeln ausgebildet sind und in zwei Reihen oder Kränzen nebeneinander angeordnet sind. Die Wälzkörper 8, 9 sind in Taschen 10, 11 des Käfigs 12 radial innen geführt. Stellt man sich jetzt diese Synchronisiereinrichtung im demontierten Zustand vor, so ist zu erkennen, dass der aus den beiden Nadelreihen 8 und 9 und dem Käfig 12 bestehende Rollenkranz aus der Nabe des Losrades 3 herausgleiten wird.

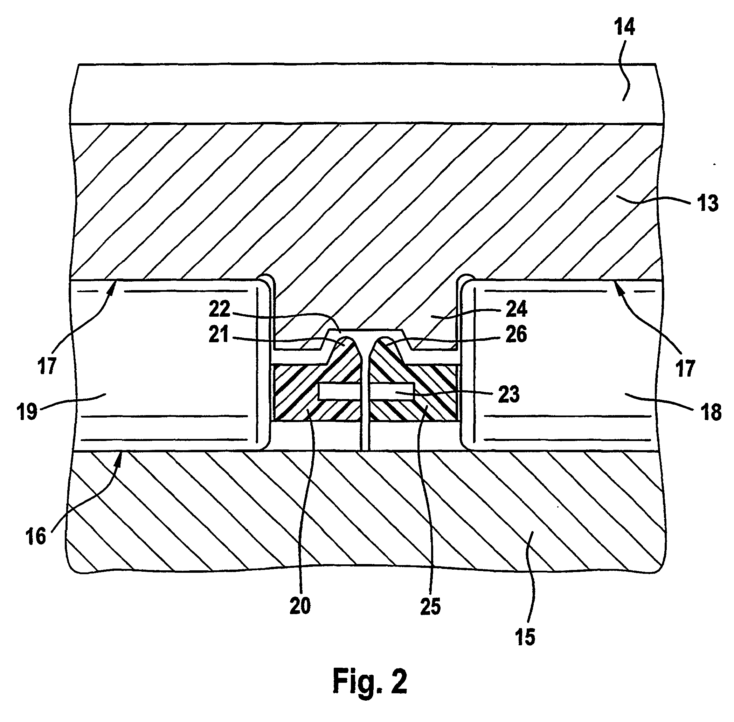

Gemäß der Erfindung in Figur 2 ist das mit der Verzahnung 14 versehene Losrad 13 auf der Welle 15 über zwei voneinander beabstandete, als Lagemadein ausgebildete zylindrische Wälzkörperreihen 18, 19 gelagert, die in je einem Käfig 20, 25 angeordnet sind. Die innere Laufbahn 16 der Wälzkörper 18, 19 wird von der Mantelfläche der Welle 15 und die äußeren Laufbahnen 17 von der Nabe des Losrades 13 gestellt. Das Losrad 13 weist den zwischen den beiden äußeren Laufbahnen 17 liegenden radial nach innen weisenden Mittelbord 24 auf, der mit der umlaufenden Nut 22 versehen ist. In diese Nut 22 sind die Vorsprünge 21, 26 der Käfige 20, 25 eingeschnappt, wobei die Vorsprünge 21, 26 den radial innenliegenden Freiraum 23 aufweisen, so dass sie beim Einfedem in die Nut 22 in diesen ausweichen können. Auf diese Weise ist in eleganter Art und Weise der Zusammenhalt von Losrad 13 und der aus Wälzkörperreihen 18, 19 und Käfigen 20, 25 bestehenden Nadelkränze gesichert.

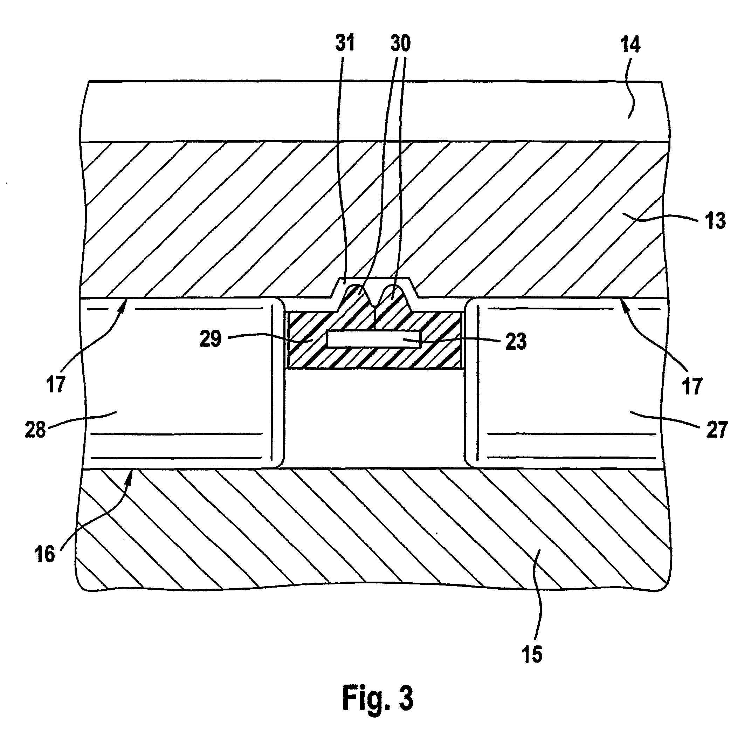

Das in Figur 3 gezeigte Losrad 13 ist auf der Welle 15 über den doppelreihigen aus zwei voneinander beabstandeten zylindrischen Wälzkörperreihen 27, 28 und dem gemeinsamen Käfig 29 bestehenden Rollenkranz gelagert. Der Käfig 29 weist radial nach außen vorstehende fedemde Vorsprünge 30 auf, die in die in der Nabe des Losrades 13 angeordnete Nut 31 eingreifen.

### Bezugszeichen

- 1: Antriebswelle
- 2: Wälzlager
- 3: Losrad
- 4: Kegelrollenlager
- 5: Hauptwelle
- 6: Laufbahn
- 7: Laufbahn
- 8: Wälzkörper
- 9: Wälzkörper
- 10: Tasche
- 11: Tasche
- 12: Käfig
- 13: Losrad
- 14: Verzahnung
- 15: Welle
- 16: innere Laufbahn
- 17: äußere Laufbahn
- 18: Wälzkörper
- 19: Wälzkörper
- 20: Käfig
- 21: Vorsprung
- 22: Nut
- 23: Freiraum
- 24: Mittelbord
- 25: Käfig
- 26: Vorsprung
- 27: Wälzkörper
- 28: Wälzkörper
- 29: Käfig
- 30: Vorsprung
- 31: Nut

## Patentansprüche

1. Lose auf einer Welle umlaufendes Zahnrad für ein Zahnräderwechselgetriebe eines Kraftfahrzeuges, das über ein Kuppelelement mit der Welle kuppelbar ist, wobei radial zwischen einer der Welle zugeordneten inneren Laufbahn und einer einer Nabe des Zahnrades zugeordneten äußeren Laufbahn zylindrische Wälzkörper angeordnet sind, **dadurch gekennzeichnet, dass** das Zahnrad (13) über zwei voneinander beabstandete aus zylindrischen Wälzkörpern (18, 19) und Käfigen (20, 25) bestehenden Rollenkränzen gelagert ist, wobei die Käfige (20, 25) mit radial nach außen gerichteten Vorsprüngen (21, 26) in eine Nut (22) eingreifen, die in einem radial nach innen weisenden Mittelbord (24) des Zahnrades (13) zwischen den äußeren Laufbahnen (17) der Rollenkränze angeordnet ist.

2. Losradlagerung nach Anspruch 1, **dadurch gekennzeichnet, dass** der Vorsprung (21, 26) des Käfigs (20, 25) elastisch ausgebildet ist.

3. Losradlagerung nach Anspruch 2, **dadurch gekennzeichnet, dass** der Vorsprung (21, 26) mit einem in radialer Richtung innen liegenden Freiraum (23) verbunden ist.

4. Losradlagerung nach Anspruch 1, **dadurch gekennzeichnet, dass** der Käfig (20, 25) an einer Umfangsstelle einen durchgehenden Längsschlitz aufweist.

5. Losradlagerung nach dem Oberbegriff von Anspruch 1 **dadurch gekennzeichnet, dass** das Zahnrad (13) über einen doppelreihigen, aus zwei voneinander beabstandeten zylindrischen Wälzkörperreihen (27, 28) und einem gemeinsamen Käfig (29) bestehenden Rollenkranz gelagert ist, wobei der Käfig (29) mit wenigstens einem radial nach außen gerichteten Vorsprung (30) versehen ist, der in eine in der Nabe des Zahnrades (13) angeordnete Nut (31) eingreift.

## Claims

1. Gear wheel which idles on a shaft, for a change speed gearbox of a motor vehicle, which gear wheel can be coupled to the shaft via a coupling element, cylindrical roller bodies being arranged radially between an inner raceway assigned to the shaft and an outer raceway assigned to a hub of the gear wheel, **characterized in that** the gear wheel (13) is mounted via two roller crown rings which are spaced apart from one another and consist of cylindrical roller bodies (18, 19) and cages (20, 25), the cages (20, 25) engaging with radially outwardly oriented projections (21, 26) into a groove (22) which is arranged in a radially inwardly pointing flange (24) of the gear wheel (13) between the outer raceways (17) of the roller crown rings.

2. Idler bearing according to Claim 1, **characterized in that** the projection (21, 26) of the cage (20, 25) is of resilient configuration.

3. Idler bearing according to Claim 2, **characterized in that** the projection (21, 26) is connected to a clearance (23) which lies in the radial direction on the inside.

4. Idler bearing according to Claim 1, **characterized in that** the cage (20, 25) has a continuous longitudinal slot at a circumferential location.

5. Idler bearing according to the precharacterizing clause of Claim 1, **characterized in that** the gear wheel (13) is mounted on a double-row roller crown ring which comprises two cylindrical roller-body rows (27, 28) which are spaced apart from one another and a common cage (29), the cage (29) being provided with at least one radially outwardly oriented projection (30) which engages into a groove (31) which is arranged in the hub of the gear wheel (13).

## Revendications

1. Roue dentée tournant librement sur un arbre pour une boîte de vitesses à engrenages d'un véhicule automobile, qui peut être accouplée à l'arbre par le biais d'un élément d'accouplement, des corps de roulement cylindriques étant disposés radialement entre un chemin de roulement interne associé à l'arbre et un chemin de roulement externe associé à un moyeu de la roue dentée, **caractérisée en ce que** la roue dentée (13) est montée sur deux couronnes de rouleaux espacées l'une de l'autre, se composant de corps de roulement cylindriques (18, 19) et de cages (20, 25), les cages (20, 25) venant en prise avec des saillies (21, 26) orientées radialement vers l'extérieur dans une rainure (22) qui est disposée dans un bord central (24) de la roue dentée (13), orienté radialement vers l'intérieur, entre les chemins de roulement externes (17) des couronnes de rouleaux.

2. Palier de roue folle selon la revendication 1, **caractérisé en ce que** la saillie (21, 26) de la cage (20, 25) est élastique.

3. Palier de roue folle selon la revendication 2, **caractérisé en ce que** la saillie (21, 26) est reliée avec un espace libre (23) situé à l'intérieur dans la direction radiale.

4. Palier de roue folle selon la revendication 1, **caractérisé en ce que** la cage (20, 25) présente une fente longitudinale continue en une position périphérique.

5. Palier de roue folle selon le préambule de la revendication 1, **caractérisé en ce que** la roue dentée (13) est montée sur une couronne de rouleaux à deux rangées, se composant de deux rangées de corps de roulement cylindriques (27, 28) espacées l'une de l'autre et d'une cage (29) commune, la cage (29) étant pourvue d'au moins une saillie (30) orientée radialement vers l'extérieur, qui vient en prise dans une rainure (31) disposée dans le moyeu de la roue dentée (13).
